# EUROPEAN PATENT APPLICATION

(11) **EP 1 353 447 A1**
(43) Date of publication of application: **15.10.2003**
(21) Application number: 03100918.6
(22) Date of filing: 07.04.2003
(51) Int. Cl.: H04B 1/16, H04B 5/00

(54) **Method of saving power in communication devices**

(30) Priority: 10.04.2002 GB 2084499
(71) Applicant: Zarlink Semiconductor AB, 175 26 Jarfalla (SE)
(72) Inventor: SIVARD, Ake, 171 70, Solna (SE)
(74) Representative: Harding, Richard Patrick

(57) **Abstract**

An electronic device with a power saving circuit incorporates a radio frequency receiver with low power consumption and including a frequency down converter. A functional device, which may be a high power radio receiver, is normally turned off during a period of inactivity. An analyzer detects a predetermined identification code in a received radio frequency signal and outputs a signal to turn on the functional device.

## Description

### Background of the Invention

### 1. Field of the Invention

This invention relates to communication devices, and in particular to a method of saving power in such devices and a power saving circuit for use with such devices.

### 2. Description of Related Art

More and more electronic devices are employing RF operating at higher and higher frequencies for communications. Similar devices exist using infrared and optical communication means. Such devices today often operate in the region of many hundreds of MHz to GHz. Such high frequencies imply high power consumption. Since the devices are generally battery powered, power saving becomes an important issue. Many current communication devices consume too much power to leave the communication function on all the time. This is especially true in the case of ultra low power RF devices used, for example, in medical applications. RF can also be used as a power switch to turn on and off a complete function within a device that may or may not use RF.

In RF modern devices it is generally not necessary to have the RF function on at 100% level of operation constantly. Therefore the RF function often has power saving features. There are four main techniques in use today.

The first technique is to let the user switch the device off when the device is not in use. This results in the most efficient power saving but is often not acceptable, e.g., in a mobile phone or a pacemaker.

The second technique is to switch the RF function off for a period of time, known as the sleep mode, for example, 30 seconds, when the communication link is inactive, and then switch it on for a few seconds to decide if an RF signal is present. If so the device is restored to full functionality; if not the device goes into sleep mode again.

In the third technique the RF receiver is not fully on; instead it only listens to determine whether an RF signal is present that might want to communicate with the device. If the receiver circuit in power down mode is made simple or operates on a much lower frequency than the normal carrier, a lot of current can be saved. If the device detects a signal while in power down mode, it returns to full functionality and starts detection to determine whether the detected signal is intended for the device.

A fourth technique relies on a combination of the second and third techniques.

The disadvantages with second technique are that in some cases the user expects to be serviced very rapidly. If the device is turned on too frequently to detect whether a signal is present, the advantages of power saving are largely lost.

The disadvantage with the third technique are that if the receiver is made to have a low power consumption, it will generally be very simple and is susceptible of detecting a much wider spectrum of signals than intended. With the amount of RF signals in the air today, the low power receiver is liable to wake up the full RF functionality almost all the time. In certain environments the power saving functionality can be effectively lost.

### Summary of the Invention

According to the present invention there is provided a power saving circuit for activating an electronic device with a sleep mode and a wake-up mode, comprising a radio frequency receiver with low power consumption including a down-converter for reducing the frequency of a received signal; a decoder for decoding a received radio frequency signal; and an analyzer for detecting a predetermined identification code in said received radio frequency signal and activating said electronic device in response to detection of said predetermined identification code.

Down-conversion of the received signal significantly increases the power saving.

The method in accordance with the invention uses a low power simplified receiver with a down conversion of the received frequency included to save power wherein an identification scheme is employed during the low energy wake-up stage. The identification code, which is unique for the particular device requested or family of devices, is present in the initial RF-transmission. The ability to detect and identify the code is already-present at the low power receiver stage. The advantage of this arrangement is twofold: First even if a very simple low power receiver is used, which detects signals all the time, the identification code associated with the wake-up signal prevents it from starting any high power RF functionality. Secondly the down conversion increases the power saving even further because the rest of the low power receiver operates on kHz signals instead of MHz.

The method can be applied in stand-alone or other low power devices that need to be in low power mode for long periods of time and then activated and deactivated with the described RF signal. These devices may or may not employ RF themselves. For example, the electronic device can be a receiver of infrared or optical signals.

In another aspect the invention provides a method of saving power in a remote electronic device having a sleep mode and a wake-up mode, comprising transmitting a radio frequency signal with an identification code; receiving said radio frequency signal at said remote device in the sleep mode; down-converting said received radio frequency signal; decoding said down-converted received radio frequency signal; and in response to detection of a predetermined identification code in said received radio frequency signal, switching said remote electronic device to the wake-up mode.

### Brief Description of the Drawings

The invention will now be described in more detail, by way of example only, with reference to the accompanying drawings, in which:-
Figure 1 is a block diagram of a first embodiment of a power saving circuit; and
Figure 2 is a block diagram of a second embodiment of a power saving circuit.

### Detailed Description of the Preferred Embodiments

In the embodiments, like parts have like reference numerals.

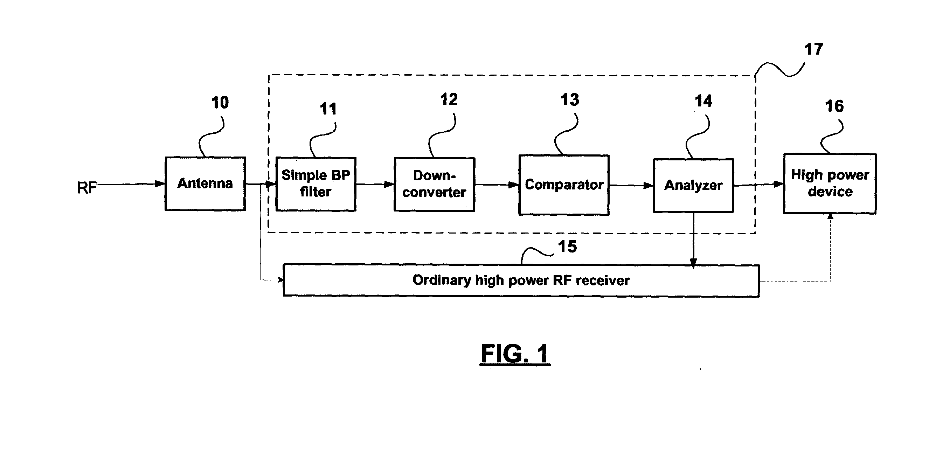

In Figure 1, an RF signal is received by an antenna 10. The antenna is connected to a simple low power receiver 17, which is constantly listening to incoming signals, and an ordinary high power receiver 15, which is normally in a sleep mode in which it is turned off or consumes minimal power.

Within the low power receiver 17, the antenna 10 is connected to a receiver chain consisting of a simple band pass filter 11, a down converter 12, a comparator 13, and an analyzer 14. In the embodiment shown, the analyzer 14 is connected to a high power RF device 16 and the ordinary high power receiver 15. After filtering in the band pass filter 11, the incoming signal is down-converted by the down-converter 12 and then passed through the comparator 13, which acts as a simple decoder.

The antenna 10 is also connected to an ordinary high power receiver 15, which is used for receiving data when in wake-up mode. The ordinary high power receiver 15 may or may not be used to communicate with the high power device 16.

The simple receiver 17 can bc made totally separate, complete with its own antenna, or it can use part of the main RF communication system. The external RF signal to wake up the device may or may not use the same frequency as is used for normal data communication.

The incoming RF signal picked up by the antenna is fed into the simple receiver circuit 17. The modulation can, for example, be Frequency Shift Keying (FSK), which is significantly lowered in frequency by the down converter. This reduction in frequency enables power saving in both the comparator 13 and the analyzer 14. The down-converter can reduce the frequency of an incoming signal from the MHz to KHz range.

The analyzer 14 includes digital logic to separate out logic ones in the FSK signal. The timing of the frequency shifts and the embedded digital code are used to prevent the receiver 17 from turning on the ordinary high power RF receiver 15. Alternatively, the signal may be amplitude modulated using Pulse Position Modulation (PPM), Pulse Width Modulation (PWM) or Pulse Amplitude Modulation (PAM), provided a suitable analyzer 14 is used.

The frequency band used to wake -up the device can be different from the one used for ordinary communication, thus enabling higher power levels in the wake-up signal than otherwise allowed (many frequency bands used in various data applications have an upper power limit).

It will be appreciated that modulation schemes other than the above mentioned can be employed as will be understood by one skilled in the art.

In this exemplary embodiment, the antenna 10 receiving the RF signal is a wide band antenna enabling the frequency of the wake-up signal to be different from the ordinary frequency without using a separate antenna. However, in an alternative embodiment, a separate antenna can be employed.

The signal picked up by the antenna is fed into the low power band-pass filter 11, which filters the incoming signal around the chosen wake-up frequency, e.g., 27 MHz. The filtered signal is then fed into the comparator 13 that after the down conversion detects an incoming signal with an amplitude higher than a preset level and outputs a digital signal to the analyzer. The comparator 13 thus acts as a decoder that decodes the incoming RF-signal (if any), and if the frequency is correct starts to convert the signal into logical ones '1' and zeros '0 '. The analyzer 14 then compares the digital bit stream with a preset wake up code stored in memory, and if found correct turns on the ordinary high power RF receiver 15 or another high power device 16. The receiver 15 then receives the incoming signal in its wake-up mode.

The receiver 15 and high power device 16 are programmed to return to the sleep mode after a predetermined period of inactivity.

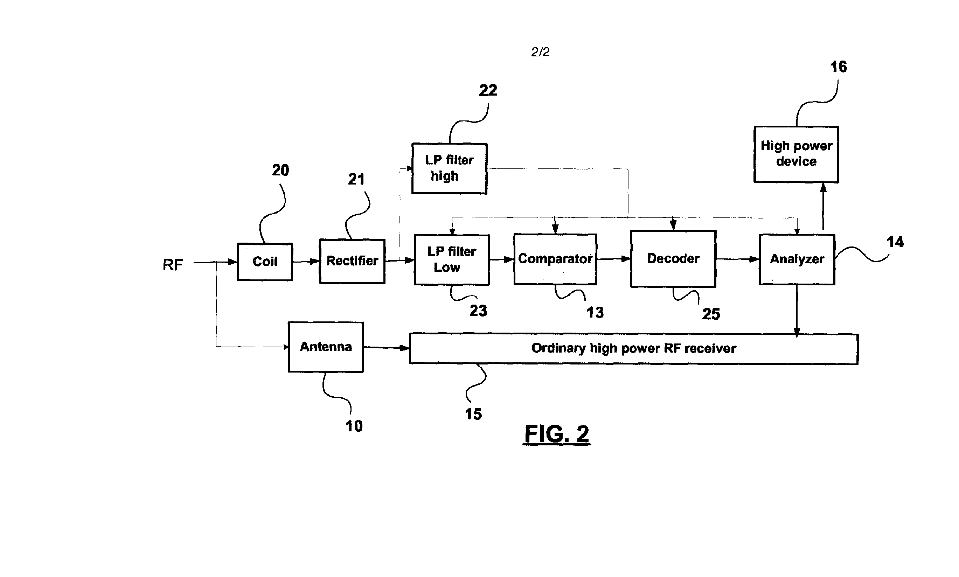

To further improve the power saving function, use can be made of a so-called RF tag as shown in the embodiment illustrated in Figure 2. A tag is used in circuits that do not have a battery. Such circuits include ID cards for door opening systems. The tag has a pick-up coil 20 and a rectifier 21 that half wave rectifies the incoming signal and feeds it into two branches. One branch has a low pass filter 23 with a very long time constant (τ) that turns the rectified signal into a DC voltage that powers the electronic circuitry of the device. The other branch feeds the signal into another low pass filter 22 with a much shorter time constant (τ). Also present in the incoming RF carrier signal is communication information carrying data. The data can, for instance, be a simple pulse-pause scheme which is easily detected by the comparator 13 as two different voltage levels. Thus the incoming RF signal can contain an address of the device for which this particular communication is intended. The address can be made unique for each individual device or for the same type of devices depending on the application.

If the device reads the correct incoming code it turns on the full RF functionality. Otherwise it just continues to be ready to detect the correct signal. The tag part of the device does not consume any power and thus can be ready a 100% of the time without wasting any power. In this case the incoming frequency is lowered into the 100 Hz to 1 kHz range with blocks 21 and 23. This is desirable since otherwise can it be difficult to get enough power to supply the remainder of the circuitry.

In Figure 2, the coil 20 picks up the RF signal, at e.g. 70 kHz. The energy is then converted in the rectifier 21 and filter 22 to a DC voltage that supplies power to blocks 23, 13, 25, and 14, which together form the RF receiver. The low pass filter 23 filters the rectified signal and feeds it to the comparator 13, where it is converted a square wave. The square wave passes into the decoder 25, where the two different voltage levels are converted into ones and zeros. The stream of bits is then compared to a register in the analyzer 26, and if the decoded signal matches the stored code, the ordinary high power RF receiver 15 is turned on. The receiver then starts to receive the ordinary RF signal from the antenna 10.

A correct detected code by the analyzer 26 can also turn on a separate high power block/chip 16 within the device.

Alternatively the coil 20 may be replaced by an antenna suitable for the frequency to be used. The proposed solution can also be used without converting the RF signal to the supply voltage for blocks 23, 13, 25 and 14.

The described circuitry lends itself to integration in a single chip, for example, using CMOS technology.

It will be appreciated by one skilled in the art that the above description represents an exemplary embodiment, and that many variants within the scope of the appended claims are possible without departing from the scope of the invention.

## Claims

1. A power saving circuit for activating an electronic device with a sleep mode and a wake-up mode, comprising:
a radio frequency receiver with low power consumption including:
a down-converter for reducing the frequency of a received signal;
a decoder for decoding a received radio frequency signal; and
an analyzer for detecting a predetermined identification code in said received radio frequency signal and activating said electronic device in response to detection of said predetermined identification code.

2. A power saving circuit as claimed in claim 1, wherein said electronic device is a high power radio frequency receiver for receiving a communication signal.

3. A power saving circuit as claimed in claim 2, wherein said low power radio frequency receiver forms part of said high power radio frequency receiver.

4. A power saving circuit as claimed in claim 2, wherein said low power radio frequency receiver is separate from said high power radio frequency receiver.

5. A power saving circuit as claimed in claim 1, wherein said identification code includes an address of said electronic device.

6. A power saving circuit as claimed in claim 2, wherein said low power receiver operates at a different frequency from said high power radio frequency receiver.

7. A power saving circuit as claimed in claim 1, wherein said identification code is modulated using frequency shift keying.

8. A power saving circuit as claimed in claim 1, wherein said identification code is modulated using amplitude shift keying.

9. A power saving circuit as claimed in claim 1, wherein said receiver with low power consumption further includes a band pass filter and a comparator acting as said decoder.

10. A power saving circuit as claimed in claim 1, further comprising a sensor and a converter for producing DC power from said received radio frequency signal to power said radio frequency receiver with low power consumption.

11. A power saving circuit as claimed in claim 10, wherein said sensor comprises a pick-up coil.

12. A power saving circuit as claimed in claim 11, further comprising a rectifier for rectifying said received signal and feeding it to a low pass filter having a long time constant for generating a DC voltage therefrom and to a low pass filter having a shorter time constant to down-convert said received signal.

13. A power saving circuit as in claim 2, where said electronic device is a receiver of infrared or optical signals.

14. A method of saving power in a remote electronic device having a sleep mode and a wake-up mode, comprising:
transmitting a radio frequency signal with an identification code;
receiving said radio frequency signal at said remote device in the sleep mode;
down-converting said received radio frequency signal;
decoding said down-converted received radio frequency signal; and
in response to detection of a predetermined identification code in said received radio frequency signal, switching said remote electronic device to the wake-up mode.

15. A method as claimed in claim 14, wherein said electronic device includes a high power radio frequency receiver that is activated in response to detection of said predetermined identification code.

16. A method as claimed in claim 14, wherein said identification code includes an address of said device.

17. A method as claimed in claim 15, wherein said signal is transmitted at a frequency different from a frequency of operation of said high power receiver.

18. A method as claimed in claim 14, wherein said identification code is modulated using frequency shift keying.

19. A method as claimed in claim 14, wherein said identification code is modulated using amplitude shift keying.

20. A method as claimed in claim 14, wherein power for receiving said signal in said sleep mode is derived from said received radio frequency signal.

21. A method as claimed in claim 20, wherein said received radio frequency signal is rectified to produce said power.

22. A method as claimed in claim 15, wherein said signal is received in a low power receiver separate from said high power receiver.

23. A method as claimed in claim 15, wherein said signal is received in a low power receiver forming part of said high power receiver.
